Europäisches Patentamt

(19) European Patent Office

Office européen des brevets

(11) Publication number: **0 009 940**
**B1**

(12) ## EUROPEAN PATENT SPECIFICATION

(45) Date of publication of patent specification: **01.09.82**

(21) Application number: **79302034.8**

(22) Date of filing: **28.09.79**

(51) Int. Cl.³: **C 04 B 43/02,**
**C 03 C 25/02, D 04 H 1/64,**
**F 27 D 1/00**

(54) **Method of making refractory fibrous material.**

(30) Priority: **03.10.78 JP 121806/78**

(43) Date of publication of application:
**16.04.80 Bulletin 80/8**

(45) Publication of the grant of the patent:
**01.09.82 Bulletin 82/35**

(84) Designated Contracting States:
**AT BE DE FR GB IT LU NL SE**

(56) References cited:
**DE - A - 1 571 482**
**DE - A - 2 438 838**
**DE - A - 2 545 728**
**DE - B - 1 150 614**
**FR - A - 2 359 100**
**US - A - 3 376 189**
**US - A - 4 011 651**

(73) Proprietor: **ISOLITE BABCOCK REFRACTORIES**
**COMPANY LIMITED**
**7, Aza Mukaiyama Oaza Hagi, Otowa-Cho**
**Hoi-Gun, Aichi-Ken (JP)**

(72) Inventor: **Sonobe, Kazuo**
**102 Akasaka-Dai, Otowa-Cho**
**Hoi-Gun, Aichi-Ken (JP)**
Inventor: **Kato, Takeo**
**68 Osakicho**
**Tomikawa-Shi, Aichi-Ken (JP)**

(74) Representative: **Weston, Walter et al,**
**PHILLIPS & LEIGH 7 Staple Inn Holborn**
**London WC1V 7QF (GB)**

Courier Press, Leamington Spa, England.

Method of making refractory fibrous material

This invention relates to a method of making a refractory material, of a known kind, consisting of a pre-compressed mass of resilient refractory fibres held in compression by a binding material which, on heating to a degradation temperature of the binder, releases the fibres so that the mass expands.

Refractory fibres, such as ceramic fibres, may contract on heating and therefore are not always suitable for use alone for such purposes as furnace lining or refractory joints. By precompression of a fibrous mass maintained by a binder which burns off or otherwise degrades so as to release the fibres at the temperature of use, the resultant expansion of the mass improves its efficiency, such as by promoting its retention in place.

In the making of such a pre-compressed mass of furnace refractory fibres it is known, from United States of America Patent Specification No. 4 011 651, to use as a binder an aqueous dispersion or emulsion of a heat degradable organic polymer and in particular aqueous dispersions of polymer precursors, sometimes referred to as latices, in which the fibre mass is soaked and mechanically pre-compressed, dried and cured so as to retain the compression of the fibre mass. A precipitating agent such as aluminium sulphate may be used to improve the uniformity of binder distribution.

It is therefore known, in a method of making a refractory material of the kind to which the invention relates, to use an aqueous preparation of a polymeric binder which is caused to deposit on the fibres.

It is also known, from United States of America Patent Specification No. 3 376 189, in making fire-resistant mineral fibreboard, to form a wet matt, on a wet machine, from an aqueous 0.4 to 2.5 percent suspension of synthetic mineral fibres with water and 6—12 percent ungelatinized starch.

The method according to the present invention is characterised by combination of the following:

a) mixing the fibres in water to form a highly dispersed aqueous suspension of the fibres,

b) adding to the aqueous suspension an aqueous preparation of the polymeric binder which is in an amount of 2—10% by weight of the solid content of binder to the fibre content of the suspension,

c) adding to the suspension a coagulent to cause the polymer to flocculate on the fibres,

d) extracting water from the aqueous suspension through a filter so as to leave on the filter a water-bound compressed felt body of fibres, and

e) drying the felt body whilst maintaining its compressed state.

Although it is known from different prior proposals to use steps corresponding generally but not specifically to the steps recited above, the stated combination is new and essential to produce the advantages of the invention described below.

In particular, the above-mentioned United States of America Patent Specification No. 4 011 651 represents the nearest prior art but it does not include steps a) and d) and the binder is incorporated by soaking a fibre blanket, for example with a 4% solution of a phenolic resin.

In United Kingdom Patent Specification No. 1 019 208 there is proposed the production of a fire-resistant board material consisting mainly of water-laid felted mineral fibres, bound together by an unspecified organic binder, in a condition of elastic compression obtained through drying in a hot press a wet lap of the fibres containing, for example, 50% water.

In United States of America Patent Specification No. 3 092 247 there is proposed a refractory-forming mat of felted refractory fibres made by vacuum forming from a slurry of a 5% concentration of fibres and a 22% solid equivalent of colloidal silica in water, sealed in an envelope with the silica forming an unset liquid binder until it hardens on exposure to temperatures of refractory use.

As compared with any of the prior proposals, the present invention essentially involves selection of the stated steps so as to give the following related advantages:

a) and d). By using a high dispersion of the fibres in water and forming against a filter, the density and degree of compression of the felt can be controlled and, moreover, intimate mixture of selected fibres can be achieved to meet refractory use requirements. The felt body is pre-compressed but flexible.

b) and c). The small proportion of binder becomes intimately dispersed through the fibres and, on addition of the coagulent, becomes virtually wholly utilised by precipitating on to the fibres to hold them in their dispersed relationship, as regards their distribution, but bound together as regards adjacent fibres or fibre groups.

Although only a small proportion of binder is used, the method of the invention employs it to such advantage that the resulting felt material is surprisingly dust-free and anyone experienced in handling ceramic fibres will appreciate the benefit of this.

e) Simple drying, such as by moderate heating, enables the pre-compressed flexible character of the felt body to be retained.

The following provisions are preferred in carrying out the method of the invention.

The length of the refractory fibres used is in the range 7 mm to 30 mm and the amount of fibres in the aqueous suspension is in the range 0.5% to 2.0% by weight against the weight of water. This quantity shows what is meant by a highly dispersed aqueous suspension although exact limitation to this range would not be realistic.

The felt body is dried by heating at a temperature higher than the minimum film-forming temperature of the polymeric binder, as explained below, and substantially lower than the temperature of use for which the refractory material is intended. In particular the preferred drying temperature is less than 100°C and the preferred minimum film-forming temperature is less than 75°C.

The following description sets out, by way of explanation and example, fuller particulars of the constituents and steps of the method of the invention.

Fibres

Many kinds of refractory fibres are known and can be used in the invention, including fibres, based on alumina, alumino-silicate, beryllia, glass, quartz and other forms of silica, titanates, such as potassium titanate, and zirconia. Asbestos and mineral wools such as rock wool and slag wool, may also be used. Mixtures of different kinds of fibres may be used and for this the initial preparation of a highly dispersed aqueous suspension is particularly advantageous because it facilitates intimate mixing.

For general furnace refractory use are preferred alumino-silicate refractory ceramic fibres, such as "KAOWOOL" (Trade Mark) obtainable from Morganite Ceramic Fibres Limited, or refractory metal oxide fibres, such as "SAFFIL" (Trade Mark) made by I.C.I. Ltd. These fibres may be used alone or as a mixture, one with the other, or with mineral wool.

"KAOWOOL" ceramic fibres are generally alumino-silicate fibres which are produced either from naturally occurring minerals, i.e. kaolin, or from blends of $Al_2O_3$ and $SiO_2$, optionally with various oxide additives, for example by melting the raw materials in a furnace and then allowing a stream of the molten alumino-silicate to be blasted by high pressure air or steam or by allowing the stream to fall on to a rotating disc or drum. Two general ranges of alumino-silicate fibre are available; the first, intended for use up to 1260°C, normally contains by weight 43—47% $Al_2O_3$ and 50—54% $SiO_2$, though other oxides may be present, the second, intended for use up to 1400°C, normally contains 52—56% $Al_2O_3$, 43—46% $SiO_2$ with sometimes the addition of other oxides.

"SAFFIL" ceramic fibre is a refractory metal oxide fibre formed, for example, by fibrising a composition having a viscosity of greater than 1 poise comprising an aqueous solution of a metal compound, for example an oxychloride, basic acetate, basic formate or nitrate of aluminium and/or zirconium, and a minor proportion of a water-soluble organic polymer, and when alumina/silica fibres are required, a water-soluble organic silicon compound such as a polysiloxane, drying the fibre formed and heating to decompose the polymer. Heating in the presence of steam is often preferred.

Besides "KAOWOOL" and "SAFFIL" fibres and their equivalents available from other commercial sources, the most likely alternative material is Mineral Wool. In this context the term mineral wool includes slag wool and rock wool. Mineral wools can, for example, be produced by passing a stream of molten rock or slag in front of high pressure steam or air jets. Slag, which can be formed into such wools, is obtained as a by-product from various metallurgical processes and the composition of the slag will depend on the particular process from which it has been obtained. Rock wools are made from molten rocks or minerals, e.g. limestone, which may contain other rocks, e.g. shales.

Irrespective of origin, the main chemical constituents of mineral wools are, in percentages by weight:—

25—50% $SiO_2$, 3—20% $Al_2O_3$, 20—45% CaO and 3—18% MgO.

The shrinkage of mineral wools, at a continued temperature of 850°C is greater than 5%, and therefore generally unacceptable.

As a practical guide refractory felt material may be made from the following fibres to meet the service temperatures shown.

| | |
|---|---|
| Mineral Wool | up to 850°C |
| Mineral Wool and alumino-silicate fibres mixed | up to 1260°C |
| Alumino-silicate fibres | up to 1400°C |
| Alumino-silicate and polycrystalline refractory metal oxide based fibres mixed | up to 1600°C |
| Polycrystalline refractory metal oxide based fibres | up to 2000°C |

The proportions of mixtures of fibres can be selected to suit specific requirements.

The length of the fibres used should be greater than 7 mm, and preferably greater than 10 mm, with a maximum length of 30 mm. If the fibres are too short effective expansion of the eventual felt in use can be achieved only by use of a large pressure difference in suction-moulding of the felt and this can cause difficulties. With fibres longer than 30 mm, unacceptable variations in thickness and density of the felt can develop in moulding and consistent production of felt suitable for thermal insulation becomes difficult.

In carrying out the invention, a practical method has been used for determining average fibre length of fibres which have been produced commercially by blowing and are entwined in a net-like structure of comparatively long fibres, forming the bulk of the structure, and shorter fibres between them. If a cluster of fibres is gently pulled apart into two pieces, fibres are left sticking out from the opposed end faces and the average of the length of 20 such fibres gives a fair indication of the range of fibre lengths in the particular batch of fibres.

As stated above, the fibres are highly dispersed in aqueous suspension, in the amount of 0.5—2.0% by weight of water. If less than 0.5% is used production efficiency is poor, the cost of power required for water extraction being high, whereas with more than 2% maintenance of a uniform dispersion is difficult, the fibre tending to deposit as a slurry, so that standard production is not achieved.

Binders The binding agents used are in general latices which can be coagulated on the surface of the fibres, dispersed in water, by the addition of a suitable coagulating agent whereupon the fibres become suspended in the water in the form of sponge-like units. This facilitates suction filter moulding of the felt and the binding action in that the compressed state produced during moulding is maintained and furthermore gives a moulded product which is flexible and easy to handle in the moulded state before drying.

The latices may be described broadly as aqueous emulsions of rubber-like substances and there may be used a commercial latex such as acrylonitrile-butadiene copolymer latex, styrene-butadiene copolymer latex, acrylic ester (acrylate) latex or vinyl chloride copolymer latex.

For best results, the polymeric binder used must meet two critical requirements.

(i) The polymer must have a minimum film-forming temperature (MFT) of less than the temperature at which the water is removed from the felt during the drying process. In practice this should be less than 100°C and preferably less than 75°C.

By minimum film-forming temperature is meant the minimum temperature at which the polymer particles in the dispersion are capable of coalescing to form coherent polymer films on loss of water. This property enables the polymer to replace water as the binder in the filter-moulded felt and retain the intrinsic compression therein. It is believed that, as the felt is dried, the surface tension forces generated by the water concentrate the polymer particles into capillary areas, situated at fibre cross-over points, the water then dries away and the polymer film forms, replacing the binding forces originally generated by the surface tension forces in the water.

(ii) The polymer must be capable of being removed from the felt or at least softened sufficiently to permit expansion to occur on heating at temperatures at or below the service temperature of the fibre used. In practice, polymers which thermally degrade to leave no significant residues at temperatures up to 600°C are preferred.

Polymers which meet these requirements include a wide range of synthetic and natural elastomers and thermoplastic plastics. Examples include polyvinyl ester polymers such as polyvinyl acetate, in the form of both homopolymers and copolymers with monomers such as ethylene and vinyl chloride, nitrile polymers such as acrylonitrile/butadiene copolymers, optionally modified to provide for self-crosslinking on heating, SBR polymers, i.e. styrene/butadiene copolymers, optionally modified to provide for self-crosslinking on heating, vinyl chloride polymers and copolymers and acrylic polymers, such as polymers of 2-ethylhexyl acrylate optionally modified to provide for self-crosslinking on heating.

In general, the softer the polymer used, the more flexible will be the resulting felt, and therefore the hardness of the polymer is a criterion which has to be considered when selecting a polymer.

Coagulation

Latices essentially contain a stabiliser, to retain the polymer in emulsion, and this may be either a soap, which may be anionic, cationic or nonionic, or a protective colloid or a combination thereof. An essential step in the invention is the flocculation of the system, which requires the destabilisation of the polymer emulsion. It is therefore important that the latex chosen has a stabilising system that can be readily destroyed by the addition of materials such as alum which will not significantly damage the polymer. It has been found that emulsions stabilised with protective colloids are harder to flocculate than those with soap stabilisers.

Any flocculating agent which will flocculate the latex/fibre mix and which will not leave any deleterious residue on the fibres in service can be used.

A preferred flocculating agent is papermakers' alum, i.e. aluminium sulphate, which has been found to be capable of flocculating most latices stabilised by soap and some having protective colloid stabilisers. Similar alternatives include aluminium polychloride and iron sulphate. Flocculation can also be achieved by changing the pH of the system, although care must be exercised to ensure that the polymer is not deleteriously affected, i.e. by hydrolysis.

In systems in which flocculation is found difficult to achieve, commercial flocculation agents such as tannin-based materials, liquid cationic polymers and solid anionic polyelectrolytes can be used successfully.

Ideally, the preferred flocculating agent and the amount of it used should be capable of giving a clear supernatant liquid when added to the latex/fibre mixture. This is readily determinable by simple text-tube experimentation.